## Europäisches Patentamt
## European Patent Office
## Office européen des brevets

(11) Publication number: **0 204 461**
**B1**

(12) **EUROPEAN PATENT SPECIFICATION**

(45) Date of publication of patent specification: **11.10.89**

(51) Int. Cl.⁴: **C 03 B 37/014,** F 23 D 14/22, F 23 D 14/58

(21) Application number: **86303839.4**

(22) Date of filing: **21.05.86**

(54) Burner for producing glass fine particles.

(30) Priority: **27.05.85 JP 113583/85**

(43) Date of publication of application:
**10.12.86 Bulletin 86/50**

(45) Publication of the grant of the patent:
**11.10.89 Bulletin 89/41**

(84) Designated Contracting States:
**DE FR GB**

(56) References cited:
**FR-A-2 496 231**
**FR-A-2 498 736**

(73) Proprietor: **THE FURUKAWA ELECTRIC CO.,
LTD.**
**6-1, 2-chome, Marunouchi Chiyoda-ku
Tokyo (JP)**

(72) Inventor: **Kawazoe, Hideyo**
**3-300 Koofuudai**
**Ichihara-shi, Chiba-ken (JP)**
Inventor: **Koguchi, Makoto**
**3-2 Tatsumidia-higashi**
**Ichihara-shi, Chiba-ken (JP)**
Inventor: **Orimo, Katsumi**
**4-10-11 Makuhari-hongo**
**Chiba-shi, Chiba-ken (JP)**

(74) Representative: **Gibson, Stewart Harry et al
URQUHART-DYKES & LORD Business
Technology Centre Senghennydd Road
Cardiff CF2 4AY South Wales (GB)**

# EP 0 204 461 B1

**Description**

This invention relates to a burner for producing glass fine particles for fabricating a porous glass base material for a communication or optical system.

Optical fibres, light guides, image fibres or rod lenses used in the fields of communication and optical systems are fabricated by producing a predetemined base material by processes such as a MCVD method, a VAD method or an OVD method, spinning the optical fibre base material thus obtained, and reducing in diameter a rod lens base material.

A conventional method of forming a porous glass base material at high speed for an optical fibre using a VAD method is already disclosed using a double flame burner system (Report No. 367 of National Conference of Semiconductor Material Section in the Association of the Japanese Electric Communication Society in 1983, and Report No. 1138 of National Conference of the Association of the Japanese Electric Communication Society in 1984).

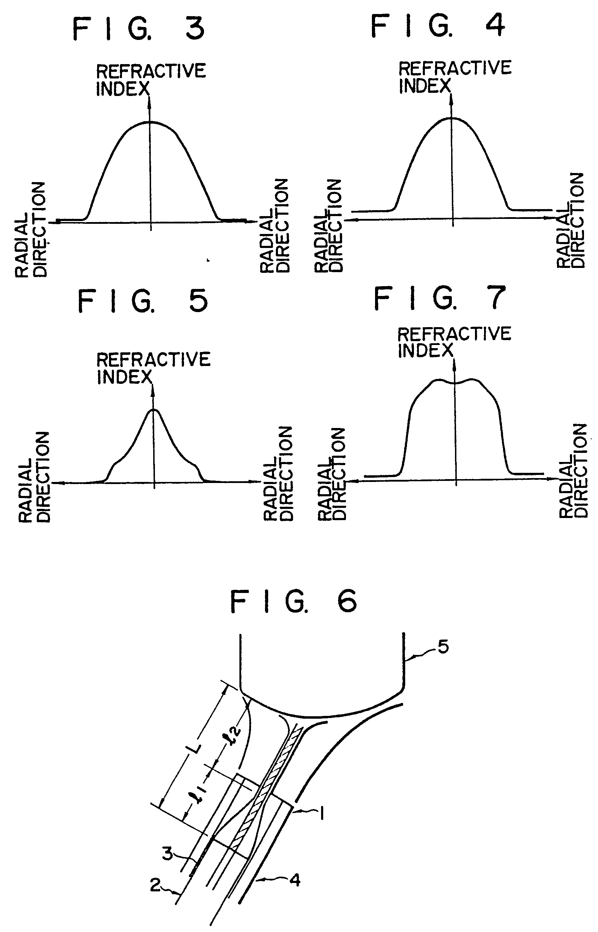

This double flame burner system is shown schematically in Figure 6, and will be briefly described.

In Figure 6, a burner 1 comprises a multiwall tube structure with an inner flame generator 2, and an outer flame generator 4 provided around the outer periphery of the flame generator 2 with an interposed sealing gas passage 3 in a relative relationship such that the end of the flame generator 2 is disposed inwardly from the end of the flame generator 4.

The flame generator 2 of the burner 1 is formed of a four-wall passage, and the flame generator 4 is formed of a five-wall passage in such a manner that the passages are concentrically disposed.

0.41 litre/min. of $SiCl_4$, 1.54 litre/min. of $GeCl_4$, 10.5 litre/min. of $H_2$, 5 litres/min. of Ar and 15 litres/min. of $O_2$ are supplied to the flame generator 2 of the burner 1 as an example of the VAD method, whilst 5 litres/min. of Ar is supplied to the sealing gas passage 3, 5 litres/min. of Ar, 0.41 litre/min. of $SiCl_4$, 24 litres/min. of $H_2$, 5 litres/min. of Ar and 25 litres/min. of $O_2$ are supplied to the flame generator 4. The flame hydrolytic reaction products of the respective gases, i.e. soot-stained glass fine particles, are accumulated from the the burner 1 in a desired shape to form a porous glass base material 5.

When the base material 5 is thus formed, an inner flame having a length $l_1$ is generated from the end of the flame generator 2 as shown in Fig. 6, and an outer flame having a length $l_2$ is generated from the end of the flame generator 4, and since the flames continue in the longitudinal direction, the total flame length L of the burner 1 becomes $L=l_1+l_2$.

The total flame is considerably longer than the single flame, and a gas stream of the raw material system shown by hatched lines in Figure 6 stays in the flame a long time.

As a result, the growth of glass fine particles in the flame is accelerated, the particle diameter increases, and the accumulating efficiency is enhanced by the inertial effect in this case to synthesize the porous glass base material 5 at a high speed.

Thus the double flame burner system as shown in Figure 6 is adapted for high speed synthesis of the porous glass base material 5, but when doping raw material for forming a refractive index distribution is supplied to the flame generator 2 to react with the flame, dopant is diffused more than required in the flame due to the long time that it stays in the flame, and the density distribution is broadened (flattened).

Thus, a porous glass base material 5 may be formed with an SI refractive index distribution as shown in Figure 7, but porous glass base materials for an optical fibre and having a GI type refractive index distribution or a triangular refractive index distribution cannot be obtained using the burner of Figure 6.

In addition, when doped raw material such as $GeCl_4$ stays in the flame for a long time, crystalline $GeO_2$ is generated in the flame and is found to bond to the base material 5, and bubbles are found to form in the base material at transparent vitrifying time.

Accordingly, an object of this invention is to provide a burner which can produce glass fine particles whilst eliminating the above-mentioned drawbacks and disadvantages, can stably fabricate porous glass base materials having a GI type or a triangular refractice index distribution and yet can suppress the production of bubbles.

According to this invention, there is provided a burner for producing glass fine particles, the burner being provided with an intermediate passage between a central passage and an outer passage and surrounding the periphery of the central passage *characterised in that* the end of the intermediate passage is disposed inwardly from the end of the outer passage and the end of the central passage is disposed between the end of the intermediate passage and the end of the outer passage.

In this burner, the central passage may, for example, be formed of a single-wall passage, the intermediate passage formed of a three-wall passage, and the outer passage formed of a four-wall passage, and when a sealing gas passage is interposed between the intermediate passage and the outer passage, $GeCl_4$ is supplied to the central passage, $H_2$, $SiCl_4$, Ar and $O_2$ are supplied to the intermediate passage, and Ar is supplied to the sealing gas passage: the burner is held in a burning state with these gas supplies to produce the glass fine particles.

When the glass fine particles are thus produced, the flame produced at the end of the intermediate passage and the flame produced at the end of the outer passage continue in the longitudinal direction.

Therefore, the total flame length of the burner is increased, the growth of the glass fine particles is accelerated by the long flame, the accumulating speed of the particles is enhanced to accelerate the synthesizing speed of the porous glass base material.

2

On the other hand, when the central passage is used for the supply of doped raw material such as $GeCl_4$, since the end of the central passage is interposed between the end of the intermediate passage and the end of the outer passage, the doped raw material is not carried by the longitudinal intermediate of the total flame so that the doped raw material is not exposed over the entire length of the total flame.

Therefore, the time that the doped raw material is in the flame is not extended, and excessive diffusion of the dopant in the flame is suppressed. Thus, when the generated glass fine particles are accumulated, the dopant density of the central portion is high, and the dopant density decreases toward the outer periphery to meet the required refractive index distribution, i.e. a porous glass base material with a GI type refractive index distribution can be formed.

In the burner of this invention, when the central passage is formed for example of a double-wall passage, the intermediate passage may be formed of a three-wall passage, and the outer passage of a four-wall passage, and a sealing gas passage, may be interposed between the intermediate passage and the outer passage. $GeCl_4$ and $SiCl_4$ may be supplied to the central passage, $H_2$, $SiCl_4$, Ar and $O_2$ to the intermediate passage, Ar to the sealing gas passage, and Ar, $SiCl_4$, $H_2$, Ar, $O_2$ to the outer passage: the burner is held in a burning state with these gas supplies to produce the glass fine particles.

In this case, a porous glass base material having a GI type refractive index distribution or a triangular refractive index distribution can be obtained, as described above.

Since the time that the doped raw material stays in the flame is not extended, crystalline dopant (which causes bubbles) is not produced , and the base material is formed with the required characteristics.

The above and other related objects and features of the invention will be apparent from a reading of the following description of the disclosure found in the accompanying drawings and the novelty thereof pointed out in the appended claims.

Figures 1 and 2 are sectional views of two embodiments of burner for producing glass fine particles and in accordance with the present invention;

Figures 3 to 5 are graphs illustrating the refractive index distributions of porous glass base materials produced using burners of this invention;

Figure 6 is a schematic explanatory view of the conventional burner; and

Figure 7 is a graph illustrating the refractive index distribution of a porous glass base material produced by the conventional burner.

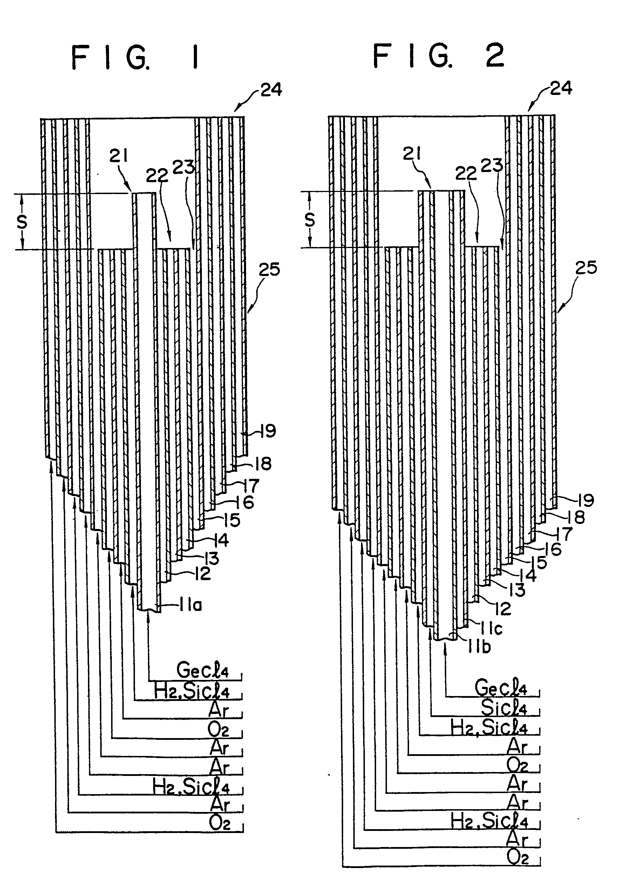

In Figure 1, showing a first embodiment of the present invention, a burner 25 of a multiwall tube (nine-wall tube) structure has a central passage 21, an intermediate passage 22, a sealing gas passage 23 and an outer passage 24.

The central passage 21 comprises a tube 11a, the intermediate passage 22 comprises three passage units 12 to 14, the sealing gas passage 23 comprises a passage unit 15, and the outer passage 24 comprises four passage units 16 to 19.

In this burner 25, the end of passage 22 is disposed inwardly from the end of the outer passage 24, and the end of the central passage 21 is disposed between the end of the intermediate passage 22 and the end of the outer passage 24.

In Figure 2, showing another embodiment of the present invention, the central passage 21 of the burner 25 comprises double-wall passage units 11b and 11c, and the rest of the structure is the same as the embodiment of Figure 1.

The ends of the passage units 11b, 11c in Figure 2 coincide with each other.

When a VAD method is performed using a burner 25 constructed as described above, the gases described above are supplied to the burner to produce a flame hydrolytic reaction and continuously inject the glass fine particles thus produced toward a rotating target to accumulate thereon, thereby producing a porous glass base material.

The embodiments of this invention will be further described with reference to following Table.

In the burner of Figure 1, the inner passage unit 11a had a 5 mm diameter, and the projecting length (S in Figure 1) of passage unit 11a beyond passage 12 was 20 mm.

In the burner of Figure 2, the inner diameter of the passage unit 11b was 5 mm, the inner diameter of the passage unit 11c was 12 mm, and the projecting length (S in Figure 2) of the passage units 11b and 11c beyond passage 12 was 20 mm.

3

### Table

| Gas | Passage | Example 1 Flow rate liter/min. | Example 2 Flow rate liter/min. | Example 3 Flow rate liter/min. |
|---|---|---|---|---|
| $GeCl_4$ | 11a | 0.41 | — | — |
| $GeCl_4$ | 11b | — | 0.41 | 0.41 |
| $SiCl_4$ | 11c | — | 0.73 | 1.40 |
| $H_2$ | 12 | 10.50 | 10.50 | 10.50 |
| $SiCl_4$ | 12 | 1.54 | 0.81 | 0.14 |
| Ar | 13 | 5.00 | 5.00 | 5.00 |
| $O_2$ | 14 | 15.00 | 15.00 | 15.00 |
| Ar | 15 | 5.00 | 5.00 | 5.00 |
| Ar | 16 | 5.00 | 5.00 | 5.00 |
| $H_2$ | 17 | 24.00 | 24.00 | 24.00 |
| $SiCl_4$ | 17 | 0.41 | 0.41 | 0.41 |
| Ar | 18 | 5.00 | 5.00 | 5.00 |
| $O_2$ | 19 | 25.00 | 25.00 | 25.00 |

The base material having the refractive index distribution (GI type) as shown in Fig. 3 was obtained by the example 1 in Table, the base material having the refractive index distribution (GI type) as shown in Fig. 4 was obtained by the example 2, and the base material having the refractive index distribution (triangular) in Fig. 5 was obtained by the example 3.

When a base material with the triangular refractive index distribution of Figure 5 is formed, it is preferable to accelerate the flowing velocity of the $SiCl_4$ injected through the passage unit 11c as compared with that of the $GeCl_4$ injected through the passage unit 11b and to enclose the Ge flow by the Si flow.

In other words, the Ge density in the centre of the flame is preferably increased as compared with that at the GI refractive index distribution forming time.

In the embodiments described above, a double-wall flame burner system has been essentially described. However, the invention is not limited to this particular arrangement. For example, a multiwall flame burner system having three-walls or more may be constructed by increasing the number of passage units.

Even in the double-wall flame burner as shown, the number of passage units may be increased unless any defect occurs.

Further, the facility of altering the position of the end of the central passage may be provided to meet the desired refractive index distribution. In this case, the passage unit 11a in Figure 1 or the passage units 11b, 11c in Figure 2 may be formed slidably with respect to the passage.

According to this invention as described above, the burner of the invention has the end of the central passage disposed between the end of the intermediate passage and the end of the outer passage. Therefore, a porous glass base material of high quality with GI or triangular refractive index distribution and almost no bubbles can be produced stably with good reproducibility.

**Claims**

1. A burner for producing glass fine particles, the burner being provided with an intermediate passage (22) between a central passage (21) and an outer passage (24) and surrounding the periphery of the central passage, characterised in that the end of the intermediate passage (22) is disposed inwardly from the end of the outer passage (24) and the end of the central passage (21) is disposed between the end of the intermediate passage (22) and the end of the outer passage (24).

2. A burner according to claim 1, characterised in that said central passage (21) is formed of a single passage unit (11a—Figure 1).

3. A burner according to claim 1, characterised in that said central passage (21) is formed of a double-wall passage unit (11b, 11c—Figure 2).

4. A burner according to any one of claims 1 to 3, characterised in that the position of the end of said central passage (21) can be altered.

**Patentansprüche**

1. Brenner zum Herstellen feiner Glaspartikel, der mit einem Zwischendurchlaß (22) zwischen einem mittigen Durchlaß (21) und einem den Umfang des mittigen Durchlasses umgebenden äußeren Durchlaß (24) versehen ist, dadurch gekennzeichnet, daß das Ende des Zwischendurchlasses (22) innen vom Ende des äußeren Durchlasses (24) und das Ende des mittigen Durchlasses (21) zwischen dem Ende des Zwischendurchlasses (22) und dem Ende des äußeren Durchlasses (24) angeordnet ist.

2. Brenner nach Anspruch 1, dadurch gekennzeichnet, daß der mittige Durchlaß (21) aus einer einzigen Durchlaßeinheit (11a—Fig. 1) gebildet ist.

3. Brenner nach Anspruch 1, dadurch gekennzeichnet, daß der mittige Durchlaß (21) aus einer doppelwandligen Durchlaßeinheit (11b, 11c—Fig. 2) gebildet ist.

4. Brenner nach einem der Ansprüche 1 bis 3, dadurch gekennzeichnet, dab die Stellung des Endes des mittigen Durchlasses (21) geändert werden kann.

**Revendications**

1. Brûleur pour la fabrication de particules fines de verre, le brûler étant pourvu d'un passage intermédiaire (22) entre un passage central (21) et un passage externe (24) et entourant le pourtour du passage central, caractérisé en ce que l'extrémité du passage intermédiaire (22) est disposée vers l'intérieur de l'extrémité du passage externe (24) et l'extrémité du passage central (21) est disposée entre l'extrémité du passage intermédiaire (22) et l'extrémité du passage externe (24).

2. Brûleur selon la revendication 1, caractérisé en ce que ledit passage central (21) est formé d'une seule unité de passage (11a—figure 1).

3. Brûleur selon la revendication 1, caractérisé en ce que ledit passage central (21) est formé d'une unité de passage à deux parois (11b, 11c—figure 2).

4. Brûleur selon l'une quelconque des revendications 1 à 3, caractérisé en ce que la position de l'extrémité dudit passage central (21) peut être modifiée.

# FIG. 1

Labels: 24, 21, 22, 23, 25, S, 19, 18, 17, 16, 15, 14, 13, 12, 11a

GeCl₄
H₂,SiCl₄
Ar
O₂
Ar
Ar
H₂,SiCl₄
Ar
O₂

# FIG. 2

Labels: 24, 21, 22, 23, 25, S, 19, 18, 17, 16, 15, 14, 13, 12, 11c, 11b

GeCl₄
SiCl₄
H₂,SiCl₄
Ar
O₂
Ar
Ar
H₂,SiCl₄
Ar
O₂

# F I G. 3

REFRACTIVE INDEX

RADIAL DIRECTION

RADIAL DIRECTION

# F I G. 4

REFRACTIVE INDEX

RADIAL DIRECTION

RADIAL DIRECTION

# F I G. 5

REFRACTIVE INDEX

RADIAL DIRECTION

RADIAL DIRECTION

# F I G. 7

REFRACTIVE INDEX

RADIAL DIRECTION

RADIAL DIRECTION

# F I G. 6